# EUROPEAN PATENT APPLICATION

(11) **EP 2 620 862 A2**
(43) Date of publication of application: **31.07.2013**
(21) Application number: 12198661.6
(22) Date of filing: 20.12.2012
(51) Int. Cl.: G06F 3/0488, G06F 3/0485

(54) **Scroll control apparatus and method of terminal**

(30) Priority: 25.01.2012 KR 20120007136
(71) Applicant: Samsung Electronics Co., Ltd, Gyeonggi-do 443-742 (KR)
(72) Inventor: Jeong, Jinhong, 443-742 Gyeonggi-do (KR)
(74) Representative: Harrison Goddard Foote LLP

(57) **Abstract**

An apparatus and a method for controlling a scroll operation of a portable terminal are provided. The method includes scrolling a screen in response to a scroll action detected on a touch panel, monitoring to detect a scroll boundary of a navigation area which is scrolled in response to the scroll action, and displaying, when the scroll boundary is detected, applications corresponding to recommended actions registered with a recommended action table of a current application in sequence.

## Description

### BACKGROUND OF THE INVENTION

### 1. Field of the Invention:

The present invention relates to an input control apparatus and a method of a portable terminal equipped with a touchscreen. More particularly, the present invention relates to an apparatus and a method for controlling scroll operation of the portable terminal.

### 2. Description of the Related Art:

Typically, a touch panel-equipped terminal uses the touch panel as an input device. In the case of using the touch panel as the input device, it is possible to implement various functions in association with a user's diverse touch gestures. The scroll action is made for scrolling a screen up and down or left and right with a touch gesture. If the scroll action reaches a scroll boundary, the screen can be scrolled no more. In the portable terminal of the related art, when the scroll action for scrolling a digital object reaches the scroll boundary, this is notified by an action, such as bouncing, accordion expansion, and highlight.

The scroll method of the related art has a limited means of notifying the user that the scroll boundary has been reached. However, the scroll action is made for the user to navigate specific applications, menus, functions, or the like. Accordingly, when the scroll action reaches the scroll boundary, the user has to take another input action to further navigate other applications, menus, functions, or the like.

Therefore, a need exists for an apparatus and a method for offering available actions when a scroll action in search of an object reaches a scroll boundary.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for offering available actions when a scroll action in search of an object reaches a scroll boundary.

Another aspect of the present invention is to provide a method and an apparatus for offering information available for a user to continue scrolling in search of a target object at a scroll boundary based on the user's state and intention.

In order to accomplish this, the present invention proposes an apparatus and a method for displaying, if the scroll action is maintained in the state where the scroll action has reached the scroll boundary, the actions recommended for the corresponding application and executing, when one of the recommended actions is selected, the selected action.

In accordance with an aspect of the present invention, an apparatus is provided. The apparatus includes a touch panel for detecting a touch event, a memory for storing recommended action tables including recommended actions per application, a control unit for, when a scroll action detected on the touch panel reaches a scroll boundary, controlling to display the recommended actions registered with the recommended action table in association with a current application, and a display unit for displaying the applications corresponding to the recommended actions at the scroll boundary of the current application under the control of the control unit.

In accordance with another aspect of the present invention, a scroll control method of a terminal is provided. The method includes scrolling a screen in response to a scroll action detected on a touch panel, monitoring to detect a scroll boundary of a navigation area which is scrolled in response to the scroll action, and displaying, when the scroll boundary is detected, applications corresponding to recommended actions registered with a recommended action table of a current application in sequence.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a terminal for processing a scroll action according to an exemplary embodiment of the present invention;

FIG. 2 is a diagram illustrating screens presenting recommended actions in association with a scroll action in a terminal according to an exemplary embodiment of the present invention;

FIG. 3 is a block diagram illustrating a configuration of a control unit of a terminal, for example, a control unit of FIG. 1 according to an exemplary embodiment of the present invention;

FIG. 4 is a flowchart illustrating a procedure for registering recommended actions according to an exemplary embodiment of the present invention;

FIG. 5 is a flowchart illustrating a procedure for displaying recommended actions at a scroll boundary of a navigation area according to an exemplary embodiment of the present invention;

FIG. 6 is a flowchart illustrating a procedure of displaying recommended actions subsequent to an end of a navigation area according to an exemplary embodiment of the present invention;

FIG. 7 is a flowchart illustrating a procedure for processing a recommended action of a gallery application according to an exemplary embodiment of the present invention;

FIG. 8 is a diagram illustrating operations related to a scroll action for a gallery application in a procedure, for example, operations of FIG. 7 according to an exemplary embodiment of the present invention;

FIG. 9 is a flowchart illustrating a procedure for processing a recommended action of an email application according to an exemplary embodiment of the present invention;

FIG. 10 is a diagram illustrating operations related to a scroll action for an email application in a procedure, for example, operations of FIG. 9 according to an exemplary embodiment of the present invention;

FIG. 11 is a flowchart illustrating a procedure for processing a setting application recommended action according to an exemplary embodiment of the present invention;

FIG. 12 is a diagram illustrating operations related to a scroll action for a setting application in a procedure, for example, operations of FIG. 11 according to an exemplary embodiment of the present invention;

FIG. 13 is a flowchart illustrating a procedure for processing a messenger application recommended action according to an exemplary embodiment of the present invention;

FIG. 14 is a diagram illustrating operations related to a scroll action for a messenger application in a procedure, for example, operations of FIG. 13 according to an exemplary embodiment of the present invention;

FIG. 15 is a flowchart illustrating a procedure for processing a calendar application recommended action according to an exemplary embodiment of the present invention;

FIG. 16 is a diagram illustrating operations related to a scroll action for a calendar application in a procedure, for example, operations of FIG. 15 according to an exemplary embodiment of the present invention;

FIG. 17 is a flowchart illustrating a procedure for processing a browser application recommended action according to an exemplary embodiment of the present invention;

FIG. 18 is a diagram illustrating operations related to a scroll action for a browser application in a procedure, for example, operations of FIG. 17 according to an exemplary embodiment of the present invention;

FIG. 19 is a flowchart illustrating a procedure for processing a music player application recommended action according to an exemplary embodiment of the present invention;

FIG. 20 is a diagram illustrating operations related to a scroll action for a music player application in a procedure, for example, operations of FIG. 19 according to an exemplary embodiment of the present invention;

FIG. 21 is a flowchart illustrating a procedure for processing a logs application recommended action according to an exemplary embodiment of the present invention;

FIG. 22 is a diagram illustrating operations related to a scroll action for a logs application in a procedure, for example, operations of FIG. 21 according to an exemplary embodiment of the present invention;

FIG. 23 is a flowchart illustrating a procedure for processing an image viewer application recommended action according to an exemplary embodiment of the present invention; and

FIG. 24 is a diagram illustrating operations related to a scroll action for an image viewer application in a procedure, for example, operations of FIG. 23 according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Although the description is made with specific reference to the actions and weights recommended per application, this is regarded in an illustrative rather than restrictive sense in order to help understand exemplary embodiments of the present invention. Thus, it is obvious that exemplary embodiments of the present invention can be practiced by those skilled in the art without the detailed features. Description of well-known functions and structures incorporated herein may be omitted to avoid obscuring the subject matter of the present invention.

Typically, the scroll function is used in search of a specific object. If the scroll action has reached a scroll boundary, this means that the user has failed finding an object or wants to perform another search. When the scroll action has reached the scroll boundary, the terminal may offer options for navigating other navigation areas in order for the user to restart the search in quick and intuitive manner.

In an exemplary embodiment of the present invention, when the scroll action for navigating objects reaches the scroll boundary, the terminal offers recommended actions subsequent to the previous screen. At this time, the recommended actions can be of 'back to the previous screen', 'move to next folder', 'move to next menu', 'move to executed application', 'execute recommended application', 'internet issue check', 'check widget information', and the like. For example, the recommended actions can be configured diversely according to the application related to the current navigation action. The recommended actions can be preset at the manufacturing state of the terminal or set by the user per application. The recommended actions can be offered by presenting new actions in sequence or in the form of selectable menu items.

As aforementioned, if the scroll action reaches the scroll boundary while the user navigates objects, this means the corresponding region has been navigated completely. According to an exemplary embodiment of the present invention, in order to provide the enhanced navigation environment in use of a portable terminal, the terminal recommends the actions available at the scroll boundary of the navigation area. At this time the recommended actions can be presented continuously depending on the configuration.

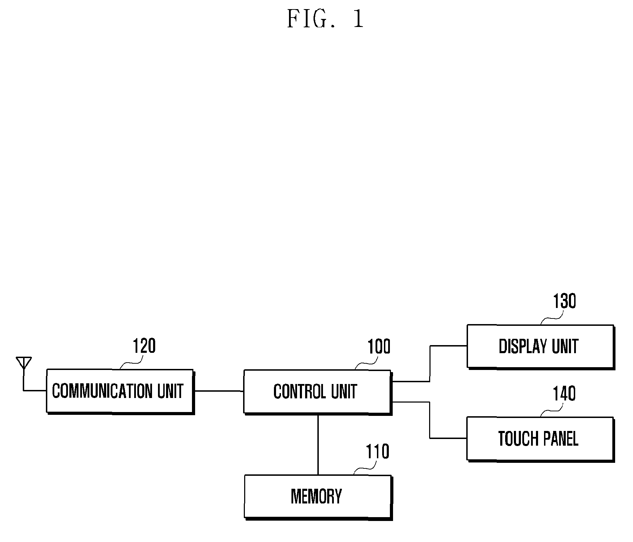

FIGs. 1 through 24, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

FIG. 1 is a block diagram illustrating a configuration of a terminal for processing a scroll action according to an exemplary embodiment of the present invention. Although FIG.1 is directed to a portable terminal, exemplary embodiments of the present invention can be applied to any type of device that supports a scroll function, operating with a touch panel or a mouse.

Referring to FIG. 1, a communication unit 120 is responsible for radio communication with a base station or another terminal. The communication unit 120 may include a transmitter for up-converting and amplifying a signal to be transmitted and a receiver for low noise amplifying and down-converting the received signal. The communication unit 120 may include a modulator and a demodulator. Here, the modulator modulates the transmission signal and sends the modulated signal to the transmitter, and the demodulator demodulates the signal received by the receiver. In this case, the modulator/demodulator can be of a Long Term Evolution (LTE), Wideband Code Division Multiple Access (WCDMA), Global System for Mobile communications (GSM), WiFi, Wireless Broadband (WiBro), Near Field Communication (NFC), and/or Bluetooth.

The control unit 100 controls overall operations of the portable terminal and, when the scroll action reaches the scroll boundary, offers recommended actions according to an exemplary embodiment of the present invention.

The memory 110 may include a program memory for storing programs for operating the terminal and a data memory for storing the data generated by the programs. More particularly, the memory 110 may store a recommended action table including the recommended actions and per-application recommended action tables.

The touch panel 140 is capable of detecting a touch input made by the user, and the display unit 130 may be a Liquid Crystal Display (LCD) or an Organic Light Emitting Diode (OLED) panel for displaying data and images associated with the execution of an application. Here, the input unit 140 and the display unit 130 can be integrated into a touchscreen.

In the above structured portable terminal, the control unit 100 detects a touch gesture by means of the touch panel 140 to control the operation of the terminal or execute a selected application. Here, the term "application" can be used as the term including all functions executable in the portable terminal. For example, the term "application" is used so as to include a gallery presentation, an email, a setting, a messenger, such as a Short Message Service (SMS), an image view, a calendar, a browser, music, a video, a log, and the like, as well as a voice call and data communication function of the terminal.

The control unit 100 monitors to detect whether the scroll action reaches a scroll boundary and, if the scroll action is maintained at the scroll boundary, controls presenting of the application information of the preset recommended actions in sequence on the display unit 130 and executing of the application of the recommended action selected by the user.

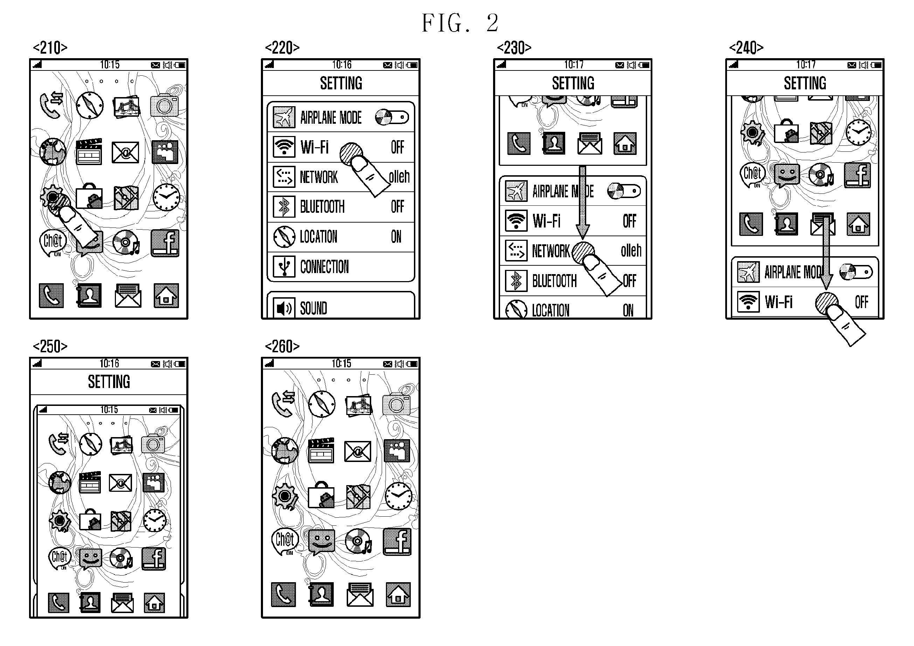

FIG. 2 is a diagram illustrating screens presenting recommended actions in association with a scroll action in a terminal according to an exemplary embodiment of the present invention.

Referring to FIG. 2, if a setting menu icon is selected through the touch panel 140 in a state in which the menu screen is displayed on the display unit 130, as denoted by reference number 210, the control unit 100 detects the selection and displays a setting menu screen on the display unit 130, as denoted by reference number 220. If the user performs a scroll action on the touch panel 140 in the state where the setting menu screen is displayed as denoted by reference number 220, the control unit 100 controls the setting menu screen to scroll in a predefined direction (i.e., a downward direction) on the display unit 130. If the scroll action reaches the scroll boundary, the control unit 100 detects this and controls the presentation of information of the application (i.e., a menu application as shown in the screen 210) set in the recommended action table of the corresponding application subsequent to the scroll boundary of the previous application (i.e., a setting menu screen) as denoted by reference number 230. For example, if it is detected that the scroll action reaches the scroll boundary, the control unit 100 controls to subsequently display the preset recommendation action (i.e., preset next application information) at the scroll boundary, as denoted by reference numbers 230 and 240. Thereafter, if the scroll action has completed, the control unit 100 controls the display unit 130 to display the application of the recommended action, as denoted by reference number 250, and executes the recommended action, as denoted by reference number 260.

As shown in FIG. 2, while navigating a screen having multiple objects with the scroll function, if the scroll action reaches the scroll boundary, the terminal subsequently displays the recommended action at the scroll boundary. Although FIG. 2 is directed to the case where the recommended action is the menu displayed at the previous state (i.e., the recommended action may be set to the previous application), various recommended actions can be set to be presented at the scroll boundary. The execution of the recommended action can be implemented such that, when the corresponding recommended action is held over a predefined time duration or selected, the recommended action is executed.

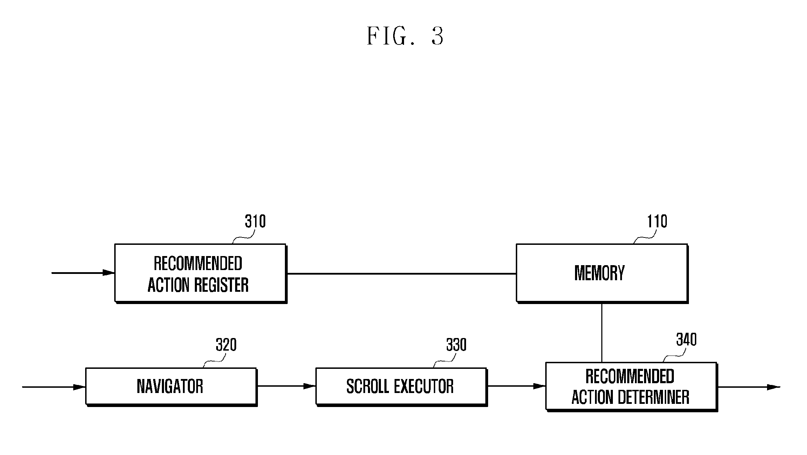

FIG. 3 is a block diagram illustrating a configuration of a control unit of a terminal, for example, a control unit of FIG. 1 according to an exemplary embodiment of the present invention.

Referring to FIG. 3, the memory 110 may include a recommended action table and at least one application table. Here, the recommended action table can be the table with which the applications for use in the portable terminal are registered, and the application table can be the table with which the recommended actions for use in the corresponding application are registered. The recommended action table can be designed as Table 1. In Table 1, # denotes number and this means that a plurality of actions may exist.

**Table 1**

| Index | Type | Action | Weight |
|---|---|---|---|
| 1 | Depth | Present screen in previous depth (gallery, setting) | |
| 2 | List | Present screen linked to list (email) | |
| 3 | similar_info_# | Present applications and widgets showing similar information (i.e., weather info., stock info., and the like) | |
| 4 | similar_app_# | Present applications and widgets having similar function (i.e., kakaotalk, ticktalk, chat-on, stock, and the like) | |
| 5 | previous_app | Present application executed right before | |
| 6 | recent_app | Present recent execution list | |
| 7 | Menu | Move to menu screen | |
| 8 | Bookmarks_3 | Internet favorite | |
| 9 | Gamelist | Present game list | |
| 10 | Home | Move to home screen | |
| 11 | widget_# | Widget running currently | |
| 12 | weather | Weather information | |
| 13 | recent log | Recent contact | |
| 14 | My_action_# | User-defined action | |
| 15 | Social Networking Service (SNS) | SNS list | |
| 16 | favorite content | Present current status of a contact | |
| 17 | back button | Execute Back button | |
| 18 | hot topics | Present recent topic | |
| 19 | music | Connect music player | |
| 20 | same publisher_# | Another application of corresponding application publisher | |
| 21 | no-action | Alarm no other action | |

The above action table can be used by the user for configuring recommended actions of a specific application. For example, when the user intends to configure the recommended action of a specific application, the control unit 100 displays the recommended action table as Table 1 to register the identification information selected by the user and the weight set by the user as a recommended action of the corresponding application with the application table. The application table may be configured with the type and weight information selected by the user from the recommended action table.

The recommended action register 310 is capable of registering the application to be used as a recommended action the recommended action table according to the user selection and configuring the application of the recommended action to be used in the respective applications per application. For example, the recommended action register 310 is capable of registering the corresponding application to be used as the recommended action. At this time, the information on the application registered with the recommended action table may include an application publisher, an application category, an application type, and an information type in the form of similar_info_#, similar_app_#, same publisher_#, and the like.

The recommended action register 310 is also capable of registering the recommended action of each application with the corresponding application table. For example, the recommended action register 310 is capable of selecting a recommended action of a specific application and registering the priority of the selected recommended action. In an exemplary case of the application using the depth type and list type actions as the recommended actions, these recommended actions can be registered with the application table along with their respective weights 1.0 and 0.9.

The recommended action information configured at the recommended action register 310 is registered with the recommended action table or the corresponding application table stored in the memory 110.

The navigator 320 is responsible for detecting the touch event occurring on the touch panel 140. In an exemplary embodiment of the present invention, the term "navigation" denotes the behavior of manipulating the screen in search of specific information. For example, the user can navigate the menu screen for selecting a specific menu item, navigate an email list for determining the content of a specific email, navigate an Internet browser screen for seeking specific information, navigate a folder screen for selecting a specific file, and the like.

The scroll executor 330 is responsible for detecting the scroll action in response to the touch event detected by the navigator 320 and the scroll navigation area. When the scroll action reaches the scroll boundary of the current application, the scroll executor 330 generates the application information and the information alarming that the scroll action has reached the scroll boundary. Thereafter, the scroll executor 330 displays the application information of the recommended action at the scroll boundary on the display unit 130 based on the recommended action information.

If it is alarmed that the scroll action has reached the scroll boundary, the recommended action determiner 340 determines the recommended action in the corresponding application table and configures the recommended action of the application registered by taking notice of the weight of the recommended action to provide the configuration information to the scroll executor 330.

As described above, the recommended action register 310 registers the recommended action configured by the user with the recommended action table and/or corresponding application table. If a certain application is executed in this state, the navigator 320 detects the touch event occurring on the touch panel 140 and sends the touch information to the scroll executor 330. The scroll executor 330 displays the corresponding application information on the screen according to the scroll action. If the scroll action reaches the boundary of the navigation area in association with the application information, the scroll executor 330 notifies the recommended action determiner 340. The recommended action determiner 340 selects the recommended action to be presented at the boundary of the navigation area from the corresponding application table (i.e., a table comprising the recommended actions of the application) stored in the memory 110 based on the currently collected information and sends the recommended action to the scroll executor 330. The scroll executor 330 displays the received recommended action on the navigation area in the form of a new item.

The recommended action table (i.e., Table 1) can store all actions executable by the portable terminal. Each action may include type, behavior, weight, and the like. Here, the type property indicates the type of the action and can be expressed as a basic type, such as a depth menu, a list menu, an info app, and the like. The action property can indicate a behavior of the corresponding recommended action. The weight can indicate the weight assigned to the corresponding recommended action.

According to the depth of the application to be registered, the recommended action may be assigned a different weight. In the case of the application table, the depth type of the first level depth, link type of the second depth, and similar_app of the third depth can be assigned the weight of 1. For example, each application table can be registered with unique Identification (ID) information of the recommended action table per depth. Accordingly, the depth of each application table can be configured based on the unique ID of each recommendation action. In addition, it is possible to use recommended actions at the third level depth but not the first and second level depths.

Although not shown in the recommended action table, the recommended actions of the application can be assigned different weights for the scroll direction (i.e., up, down, left, and right). For example, a certain application is assigned the weight of 1 for the depth type in the right direction, the link type in the left direction, and the similar_app in the up and down directions. For example, it is possible to register the recommendation action table per scroll direction using the unique ID. In addition, it is possible to request the recommended action based on the unique ID.

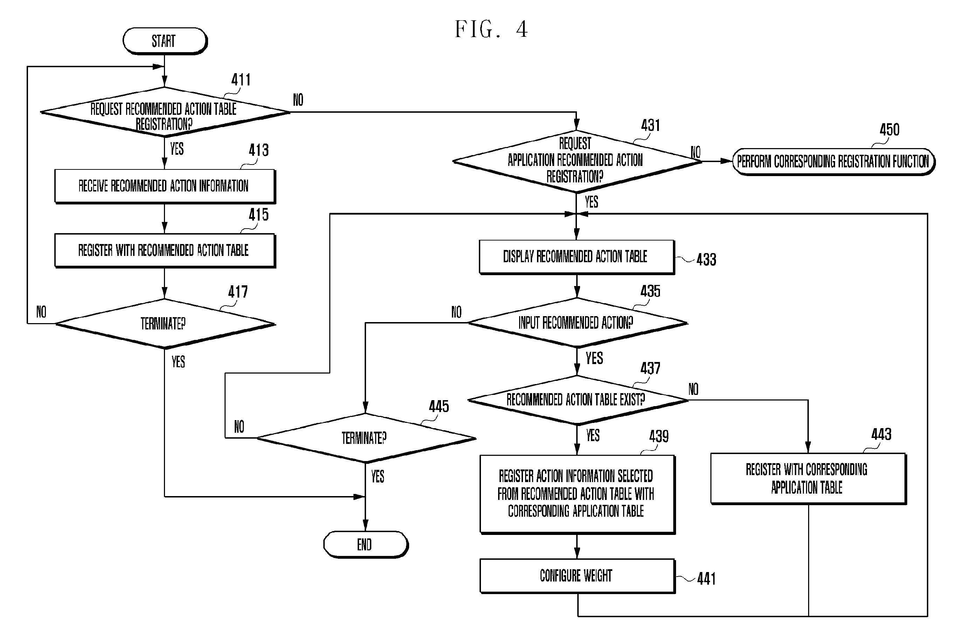

FIG. 4 is a flowchart illustrating a procedure for registering recommended actions according to an exemplary embodiment of the present invention. This procedure can be executed by the recommended action register 310 of the control unit 100.

Referring to FIG. 4, if a recommended action table application registration request occurs, the control unit 100 detects the request at step 411, receives the information on the corresponding application at step 413, and stores the received application information in the recommended action table at step 415. Each application can be registered with the recommended action table to use the recommended action scrolling function. The stored application information may include the an application publisher, an application category, an application type, an information type, and a menu structure. The application information can be registered in the forms of similar_info_#, similar_app_#, same publisher_#, and the like. If the application information is registered with the recommended action table successfully, the recommendation register 310 detects this at step 417 and ends the application registration procedure.

The control unit 100 can configure the recommended action table per application. If the user request for registering a specific application as a recommended action is received, the control unit 100 detects this at step 431 and displays the recommended action table at step 433. Thereafter, the control unit 100 determines if a recommended action is input at step 435. If it is determined that a recommended action is input, the control unit 100 determines whether the recommended action is selected from the recommended action table at step 437. In contrast, if it is determined that a recommended action is not input at step 435, the control unit 100 determines whether the recommended action should be terminated at step 445. If it is determined that the recommended action is selected from the recommended action table, the control unit 100 registers the recommended action selected from the recommended action table with the corresponding application table at step 439 and registers the weight configured by the user at step 441. Otherwise, if it is determined that the recommended action is not selected from the recommended action table, the control unit 100 registers the input recommended action with the table of the corresponding application at step 443. For example, if the recommended action not existing in the recommended action table is input, the user is capable of creating a new action and registering the new action with the corresponding application table. Once the recommended action registration procedure has completed, the control unit 100 detects this and ends the corresponding procedure.

The application table can be created using the recommended action table or the identification information of the recommended action table. The former approach is of determining the items of the applications to be configured as recommended actions in the recommended action table and excluding the items that are not determined in registering as recommended action of the corresponding application. The latter approach is of configuring the application table using the identification information in the recommended action table.

The application can be configured with one or more recommended actions. In a case where a plurality of recommended actions are selected, the recommended actions can be registered with the corresponding application table along with respective weights.

As aforementioned, if multiple recommended actions are configured, the control unit 100 is capable of configuring a plurality of recommended actions of specific application and registering the recommended actions with priorities. For example, the control unit 100 is capable of configuring 'depth type' and 'list type' as recommended actions and registering these recommended action with the corresponding application table along with the respective weights of 1.0 and 0.9. In this case, the control unit 100 is capable of executing the depth type as the recommended action with the highest priority.

Once the recommended actions of the respective applications have been registered, the control unit 100 is capable of displaying the configured recommended action in response to the scroll action taken in association with the corresponding application.

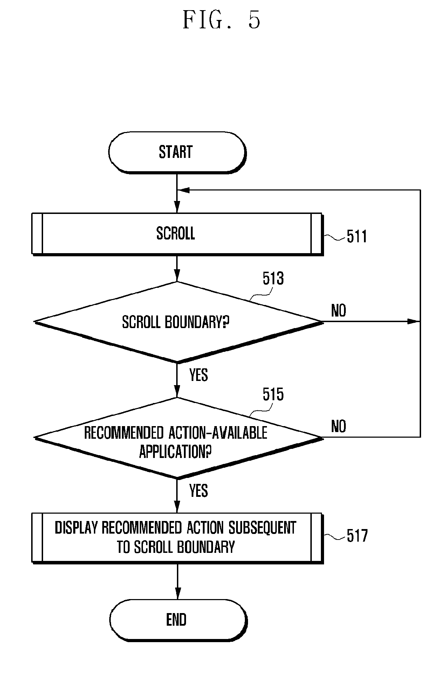

FIG. 5 is a flowchart illustrating a procedure for displaying recommended actions at a scroll boundary of a navigation area according to an exemplary embodiment of the present invention. The procedure depicted in FIG. 5 can be performed by the navigator 320, the scroll executor 330, or the recommended action determiner 340 of the control unit 100.

Referring to FIG. 5, the navigator 320 of the control unit 100 performs navigation in response to the touch event occurring on the touch panel 140 at step 511. Here, the term "navigation" denotes executing actions triggered by all touch events for manipulating the screen in search of specific information on the corresponding application execution screen. The actions include navigating the menu screen for selecting a specific menu item, navigating an email list for determining the content of a specific email, navigating an Internet browser screen for seeking specific information, and navigating a folder screen for selecting a specific file. The scroll executor 330 of the control unit 100 receives a touch event detected by the navigator 320 and analyzes the touch event to determine whether the scroll action reaches the scroll boundary of the navigation area. If it is determined that the scroll action has reached the scroll boundary, the control unit 100 detects this at step 513 and determines whether the current application is the action using a recommended action at step 515. If the current application uses a recommended action (i.e., the corresponding application table), the control unit 100 controls to subsequently display the recommended action registered with the application table at the scroll boundary of the navigation area at step 517. In this case, when the scroll boundary is detected, the scroll executor 330 notifies the recommended action determiner 340 of the detection of the scroll boundary, and the recommended action determiner 340 searches the application table stored in the memory 110 for the recommended action information of the corresponding application and notifies the scroll executor 330 of the found information. The scroll executor 330 displays the notified recommended action subsequent to the navigation area. If the user commands to execute the corresponding recommended action in the state where the recommended action is displayed subsequent to the scroll boundary of the navigation area, the control unit 100 executes the application of the corresponding recommended action at step 517 and ends the procedure of displaying recommended actions.

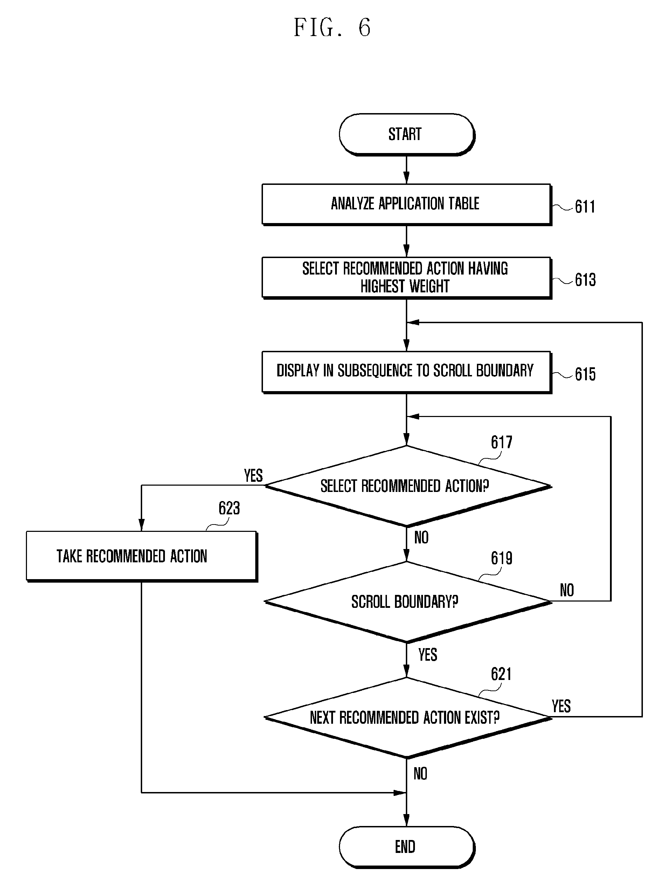

FIG. 6 is a flowchart illustrating a procedure of displaying a recommended action subsequent to an end of a navigation area according to an exemplary embodiment of the present invention. The procedure depicted in FIG. 6 can be step 517 of FIG. 5.

Referring to FIG. 6, if the current application uses a recommended action, the control unit 100 analyzes the recommended actions in the corresponding application table at step 611, selects the recommended actions having the highest priority at step 613, and displays the application of the selected recommended action subsequent to the end of the navigation area at step 615. If it is determined that a request to execute the corresponding application in the state where the recommended action is displayed at step 617, the control unit executes the selected recommended action at step 623. However, if it is determined that no recommended action is selected at step 617, the control unit 100 continues scrolling of the recommended action. At this time, if the scroll action reaches the scroll boundary of the navigation area of the recommended action, the control unit 100 detects this at step 619 and determines whether there is the recommended action having the next highest priority at step 621 and, if the recommended action having the next highest priority exists, returns the procedure to step 615 to repeat the above-described operation.

While the scroll action continues, the control unit 100 displays the applications of the recommended actions registered with the corresponding application table continuously and, if a specific recommended action is selected by the user in the state of displaying the recommended actions sequentially, executes the application corresponding to the selected recommended action.

As described above, the portable terminal is capable of offering, when a scroll action reaches a scroll boundary of the navigation area having objects of the current application, the applications of the recommended actions. At this time, the recommended action can be the application executable subsequent to the current application and configurable by the user in advance.

Typically, a gallery application is provided with a depth navigation structure. Accordingly, when a gallery application is registered in association with a recommended action, it can be registered along with the related information, such as an application publisher (i.e., Samsung), an application category (i.e., an image viewer), an application type (i.e., an app), and an information type (i.e., NULL). For example, the gallery recommended action table can be registered along with same publisher_3 and similar_app_2, and the recommended action of the depth type can be configured with the weight of 1.

If a recommended action is requested at the scroll boundary of the navigation area, the control unit 100 selects the depth type recommended action having the highest weight from the gallery recommended action table to provide the previous depth menu as the recommended action.

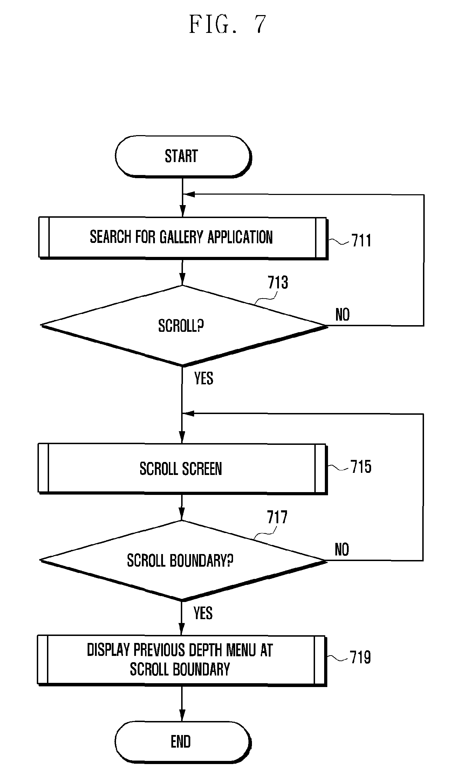

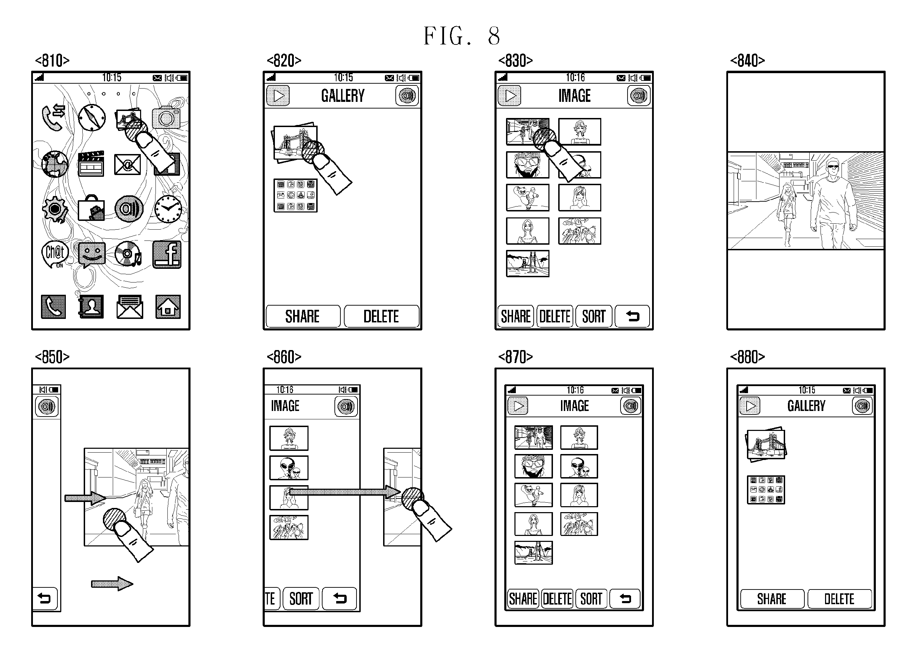

FIG. 7 is a flowchart illustrating a procedure for processing a recommended action of a gallery application according to an exemplary embodiment of the present invention, and FIG. 8 is a diagram illustrating operations related to a scroll action for a gallery application in a procedure, for example, operations of FIG. 7 according to an exemplary embodiment of the present invention.

Referring to FIGs. 7 and 8, the control unit 100 performs gallery search operation at step 711. In the gallery search operation, the user selects a gallery menu on the menu screen as denoted by reference number 810 of FIG. 8, selects one of multiple image folders as denoted by reference number 820, and selects a specific picture as denoted by reference number 830 in the state where the selected image folder containing pictures is opened as denoted by reference number 840. Thereafter, if the user takes a scroll action on the screen as denoted by reference number 850, the control unit 100 detects the scroll action at step 713 and controls scrolling the picture on the display unit 130 at step 715. At this time, if the scroll action reaches the scroll boundary of the picture area, the control unit 100 detects this at step 717, displays the recommended action registered with the gallery recommended action table at step 719 and ends the procedure of processing recommended actions. For example, when the scroll action reaches the scroll boundary of the picture area, the control unit 100 controls the subsequent displaying of the image folder (including the selected picture) located at the previous depth to the picture as denoted by reference number 860. If the scroll action is maintained, the control unit 100 continues displaying the screens of the previous depths in a stepwise manner as denoted by reference numbers 870 and 880.

Meanwhile, an email application is provided with a list type item navigation structure. Accordingly, when registering an email recommendation action, the email application is registered along with its information, such as an application publisher (i.e., Samsung), an application category (i.e., an email), an application type (i.e., an app), and an information type (i.e., an email). For example, the recommended action can be registered with the recommended action table in the form of same publisher_4, similar_app_3, and similar_info_3. In addition, the email application can be registered in association with the list type recommended application along with the weight of 1.

If the recommended action is requested at the scroll boundary of the navigation area, the control unit 100 is capable of providing the list type recommended action having the highest weight. In match with the scroll direction, if the object is scrolled in a next list direction, the control unit 100 controls to show the email on the next list. Otherwise, if the object is scrolled in a previous list direction, the control unit 100 shows the email on the previous list.

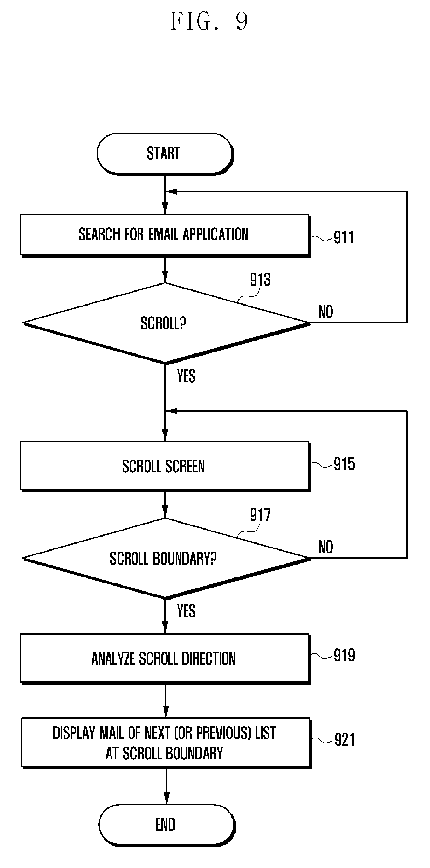

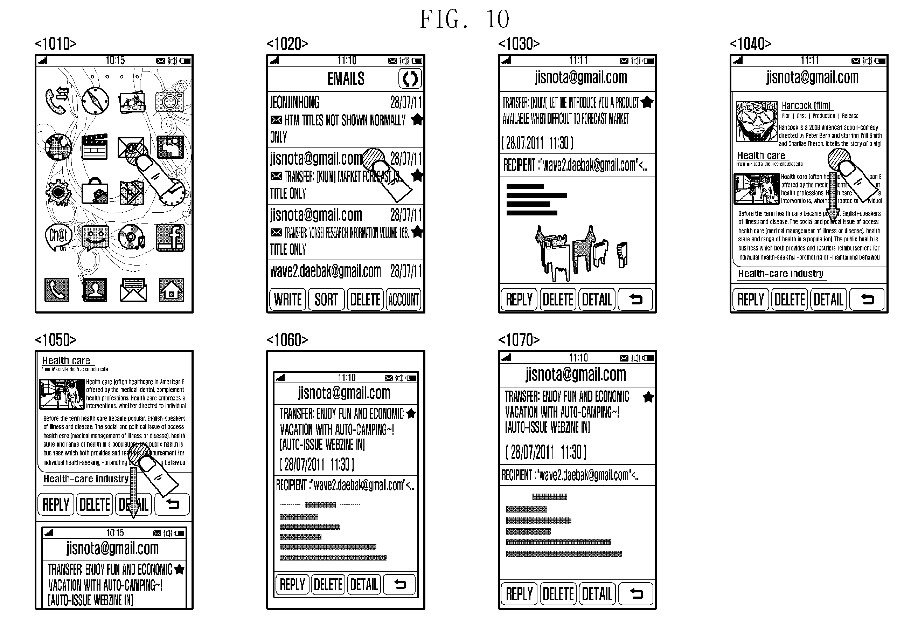

FIG. 9 is a flowchart illustrating a procedure for processing a recommended action of an email application according to an exemplary embodiment of the present invention, and FIG. 10 is a diagram illustrating operations related to a scroll action for an email application in a procedure, for example, operations of FIG. 9 according to an exemplary embodiment of the present invention.

Referring to FIGs. 9 and 10, the control unit 100 performs an email search operation at step 911. At this time, if the user selects an email menu on the menu screen as denoted by reference number 1010 of FIG. 10, the control unit 100 displays an email list on the screen as denoted by reference number 1020 and, if a specific email is selected from the email list, displays the content of the selected email on the screen as denoted by reference number 1030. Thereafter, if the user takes a scroll action, the control unit 100 detects the scroll action at step 913 and controls the scrolling of the email content on the display unit 130 at step 915. At this time, if the scroll action reaches the scroll boundary, the control unit 100 detects this at step 917, analyzes the scroll direction at step 919, and controls the subsequent presentation of the content of the previous (or the next) email item to the content of the current email item according to the scroll direction at step 921. Thereafter, the control unit 100 ends the procedure of processing recommended actions.

In the exemplary embodiment of FIG. 10, the control unit 100 detects that the scroll action is taken in the previous mail direction (i.e., in the upward or downward direction) so as to scroll on the screen as denoted by reference number 1040 and 1050 of FIG. 10, and selects the previous email item on the email list at the end of the content of the current email item to display the content of the previous email on the screen, as denoted by reference numbers 1060 and 1070 of FIG. 10. At this time, if the scroll action is maintained, the control unit 100 selects the email items in the scroll direction to display the contents of the selected email items in sequence.

A setting application is provided with both the depth and list types navigation structure. Accordingly, when registering it in association with a recommended action, the setting application is registered with the information, such as an application publisher (i.e., Samsung), an application category (i.e., a setting), an application type (i.e., an app), and an information type (i.e., NULL). For example, the recommended action can be registered with the recommended action table along with the parameters, such as same publisher_6 and similar_app_6. In addition, the setting application can be registered in association with depth type recommended application having the weight of 1 and as list type recommended application having the weight of 0.9.

If the recommended action is requested at the scroll boundary of the navigation area, the control unit 100 is capable of providing the depth type recommended action having the highest weight. At this time, the depth type recommended action can be the previous depth menu. If the depth menu is not of the intended one, the user is capable of maintaining the scroll action such that the control unit 100 controls to display another setting menu arranged next in the list with the list type recommended action having the next highest weight.

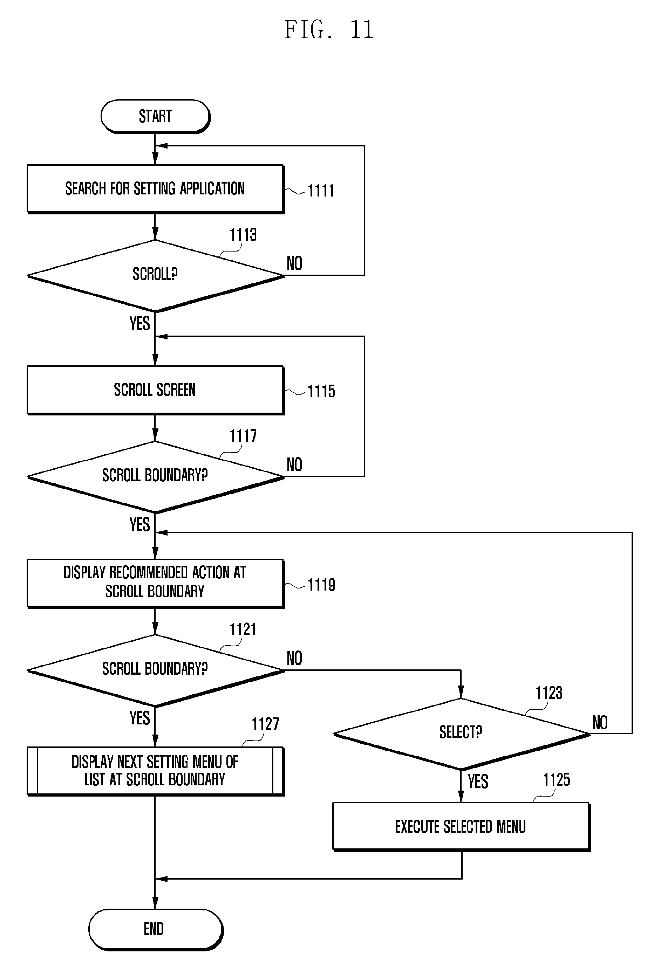

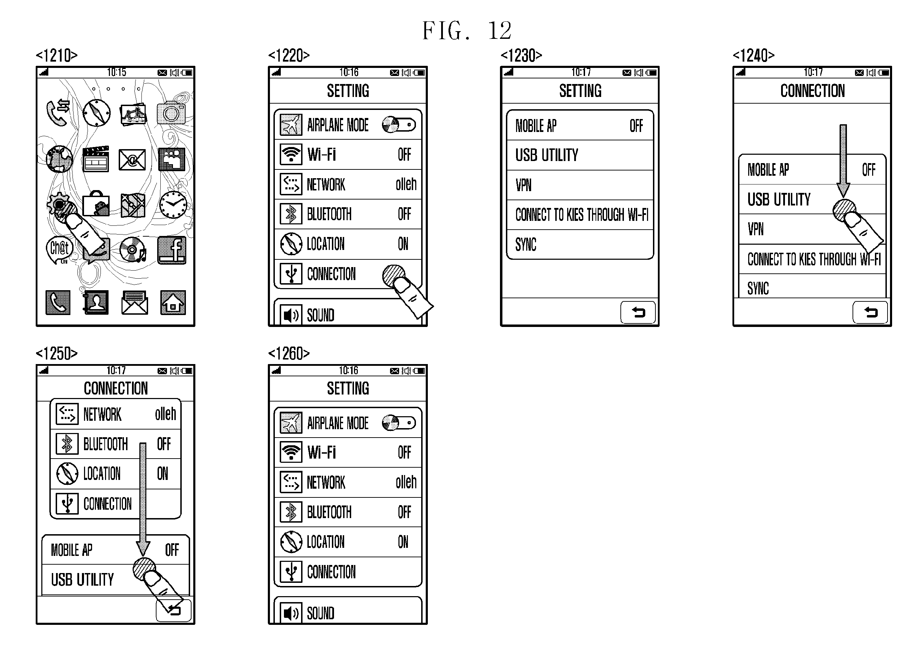

FIG. 11 is a flowchart illustrating a procedure for processing a setting application recommended action according to an exemplary embodiment of the present invention, and FIG. 12 is a diagram illustrating operations related to a scroll action for a setting application in a procedure, for example, operations of FIG. 11 according to an exemplary embodiment of the present invention.

Referring to FIGs. 11 and 12, the control unit 100 performs a setting menu search operation at step 1111. At this time, if the user selects a setting menu on the menu screen as denoted by reference number 1210, the control unit 100 controls to display a list of submenus on the screen as denoted by reference number 1220 and, if a submenu item is selected from the submenu list (i.e., a connection setting submenu), displays the connection menu screen as denoted by reference number 1230. Thereafter, if the user takes a scroll action on the connection menus screen, the control unit 100 detects this at step 1113 and controls to scroll the connection menu screen on the display unit 130 at step 1115 as denoted by reference number 1240. At this time, if the scroll action reaches the scroll boundary, the control unit 100 detects this at step 1117 and displays the recommended action (i.e., a previous depth menu) at the scroll boundary of the navigation area on the screen at step 1119 as denoted by reference number 1250. In this case, the list of submenu items (i.e., a previous depth) is displayed as shown on the screen 1220 and, if the submenu is selected, the control unit detects this at step 1123 and displays the previous depth screen at step 1125 as shown in the screen 1260. However, if the scroll action is maintained at the scroll boundary of the navigation area, the control unit 100 detects this at step 1121 and displays the recommended action having the next highest priority subsequent to the navigation area at step 1127. Thereafter, the control unit 100 ends the procedure of processing setting application recommended action.

At this time, the setting application can be registered in association with a depth type recommended action having the weight of 1 and as a list type recommended action having the weight of 0.9. In this case, when the scroll action reaches the scroll boundary, the control unit 100 controls to display the depth type recommended action having the highest weight as shown in the screen 1250 and, if the scroll action is maintained, controls to display the setting menu arranged next in the list according to the list type having the next highest priority at step 1127.

A messenger application (i.e., an SMS, Instant messenger) is the application for basic social activity and has many similar activities. When registering it in association with a recommended action, the messenger application is registered with its information, such as an application publisher (i.e., Samsung), an application category (i.e., a messenger), an application type (i.e., an app), and an information type (i.e., social). For example, the recommended action can be registered with the recommended action table along with the parameters, such as same_publisher_8, similar_app_8, and similar_info_5. In addition, the messenger application can be registered in association with similar_app recommended action having the weight of 1 and as an SNS recommended action having the weight of 0.9.

If the recommended action is requested at the scroll boundary of the navigation area, the control unit 100 is capable of providing a similar chatting program as the recommended action by displaying the similar_app recommendation action having the highest weight. At this time, if the similar application action is not of the intended one, the user is capable of maintaining the scroll action such that the control unit 100 controls to display the SNS application having the next highest priority as the recommended action. When displaying the recommended action, the contact information corresponding to the contact information provided by the first messenger application can be presented in association with the recommended action. For example, the recommended action can provide the user intended information acquired based on the presented information as well as the similar messenger.

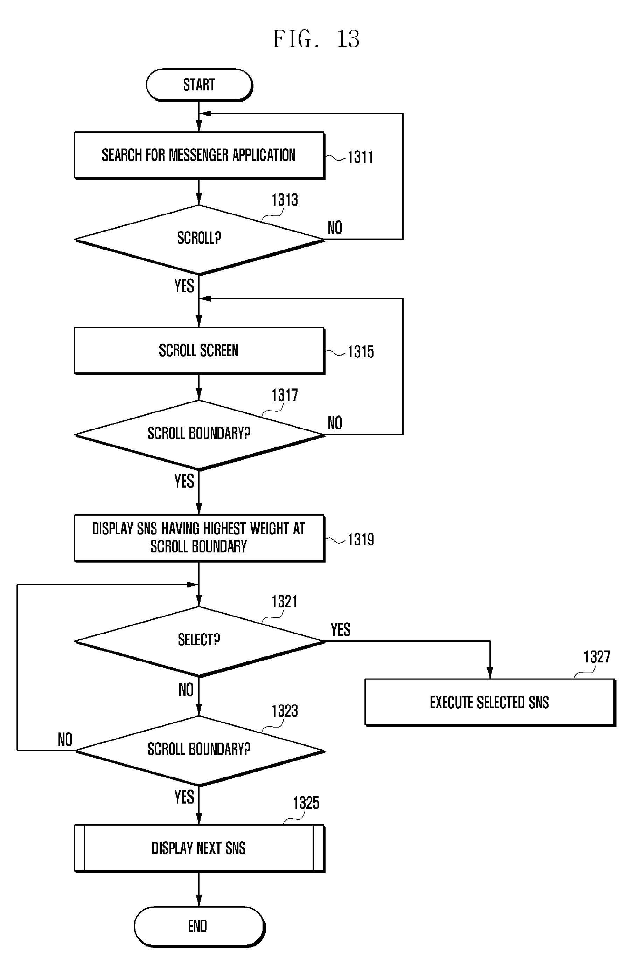

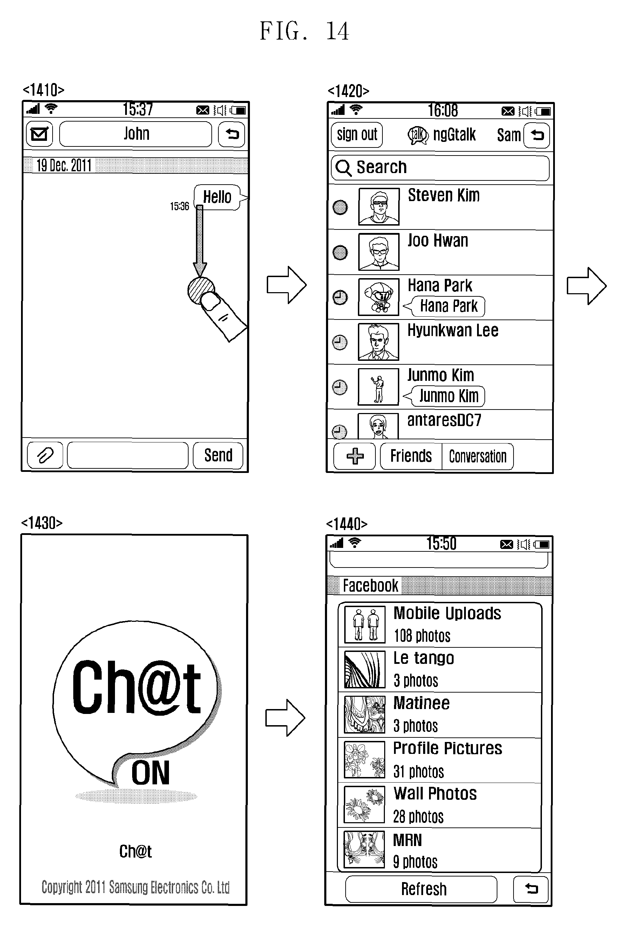

FIG. 13 is a flowchart illustrating a procedure for processing a messenger application recommended action according to an exemplary embodiment of the present invention, and FIG. 14 is a diagram illustrating operations related to a scroll action for a messenger application in a procedure, for example, operations of FIG. 13 according to an exemplary embodiment of the present invention. Here, it is assumed that the priority of the similar_app as the recommended action is registered in the order of ngGtalk, chat on, and facebook.

Referring to FIGs. 13 and 14, the control unit 100 performs a messenger search operation at step 1311. If the user takes a scroll action, the control unit 100 detects the scroll action on the screen at step 1313 as denoted by reference number 1410 and controls the scrolling of the image displayed by the display unit 130 at step 1315. If the scroll action reaches the scroll boundary of the navigation area, the control unit 100 detects this at step 1317 and displays the recommended action (i.e., an SNS) having the highest weight at step 1319 as denoted by reference number 1420. If the SNS is selected, the control unit 100 detects the SNS selection at step 1321 and executes the SNS at step 1327 as denoted by reference number 1430. At this time, the user is capable of executing the SNS of the recommended action using the subscriber information of the messenger as denoted by reference number 1440. However, if the displayed SNS is not selected, the control unit 100 performs steps 1323 and 1325 to display the recommended action having the next highest priority in sequence and ends the procedure of processing a messenger application recommended action. For example, if the scroll action is maintained in the above state, the control unit 100 displays the SNS applications in their priority order.

A calendar application is the application for organizing schedules and interoperated with other applications and searched frequently. When registering it in association with a recommended action, the calendar application is registered with the information, such as an application publisher (i.e., Samsung), an application category (i.e., a calendar), an application type (i.e., an app), and an information type (i.e., a schedule). For example, the calendar application can be registered with the recommended action table along with the parameters of same publisher_9, similar_app_9, and similar_info_6. In addition, the calendar application can be registered in association with weather_info recommended action having the weight of 1, search recommended action having the weight of 0.9, and messenger recommended action having the weight of 0.8.

If the scroll action reaches the scroll boundary such that a recommended action is requested, the control unit 100 is capable of displaying the weather_info recommended action having the highest weight to provide the information in the form of a weather widget. If the user maintains the scroll action, the control unit 100 provides the search recommended action having the next highest priority subsequently and activates the messenger application with the contact information included in the schedule. At this time, the contact information provided to the recommended action can be the one acquired based on the contact information viewed in the first calendar application. For example, the recommended action can be configured not only to display the messenger application but also to provide a means for communication with the counterpart user based on the contact information provided by the application.

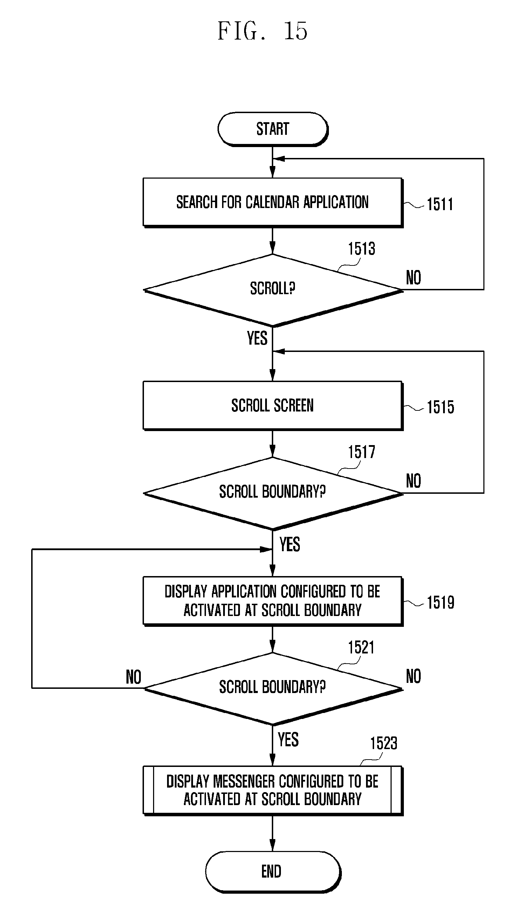

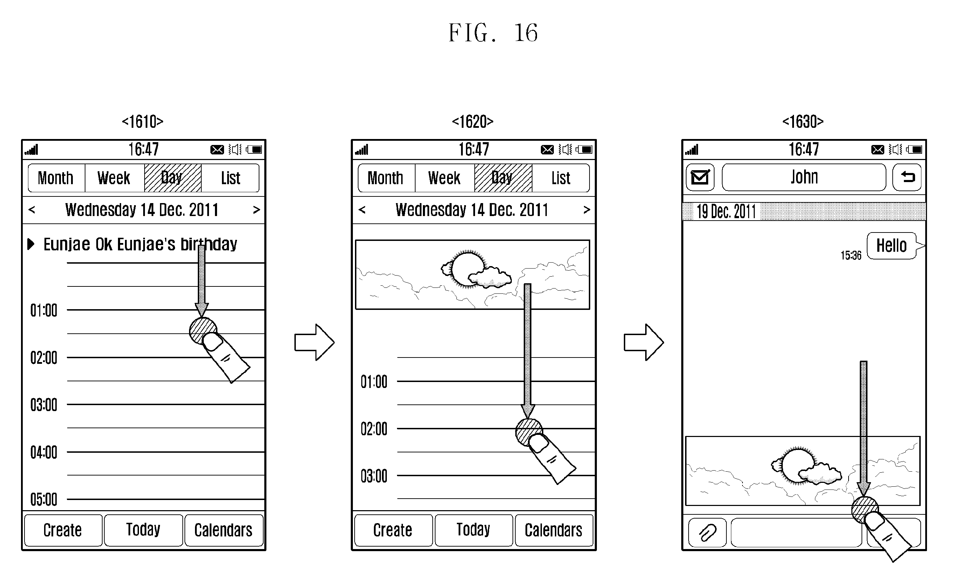

FIG. 15 is a flowchart illustrating a procedure for processing a calendar application recommended action according to an exemplary embodiment of the present invention, and FIG. 16 is a diagram illustrating operations related to a scroll action for a calendar application in a procedure, for example, operations of FIG. 15 according to an exemplary embodiment of the present invention.

Referring to FIGs. 15 and 16, the control unit 100 performs the calendar search operation at step 1511. If the user takes a scroll action as denoted by reference number 1610, the control unit 100 detects the scroll action at step 1513 and controls the scrolling of the image displayed by the display unit 130 at step 1515. If the scroll action reaches the scroll boundary, the control unit 100 detects this at step 1517 and displays the recommended action (i.e., a weather widget) having the highest weight at step 1519 as denoted by reference number 1620. If the scroll action is maintained in this state, the control unit 100 detects the scroll boundary of the recommended action at step 1521, displays the messenger applications in their priority order on the screen at step 1523 as denoted by reference number 1630, and ends the procedure of processing a calendar application recommended action. In the case of executing the messenger application, the control unit 100 may acquire contact information based on the contact information of the calendar application.

A browser application is the application for surfing websites and has various functions. When registering it in association with a recommended action, the browser application can be registered with the recommended action table along with the information, such as an application publisher (i.e., Samsung), an application category (i.e., a browser), an application type (i.e., an app), and an information type (i.e., NULL). For example, the browser application recommended action can be registered with the recommended action table along with the parameters of same publisher_10 and similar_app_10. In addition, the browser application can be registered in association with recent_pages action having the weight of 1 for up/down scroll and history page action having the weight of 0.9. The browser application can also be registered in association with previous_page action having the weight of 1.0 for left/right scroll and opened windows action having the weight of 0.9.

If the scroll action reaches an up/down scroll boundary such that the recommended action is requested, the control unit 100 is capable of taking the recent_pages recommended action having the highest weight to provide recent pages. If the scroll action is maintained in this state, the control unit 100 is capable of taking the history page recommended action having the next priority order. If the scroll action reaches a left/right scroll boundary, the control unit 100 controls the sequence presentation of the previous_page action and opened windows action.

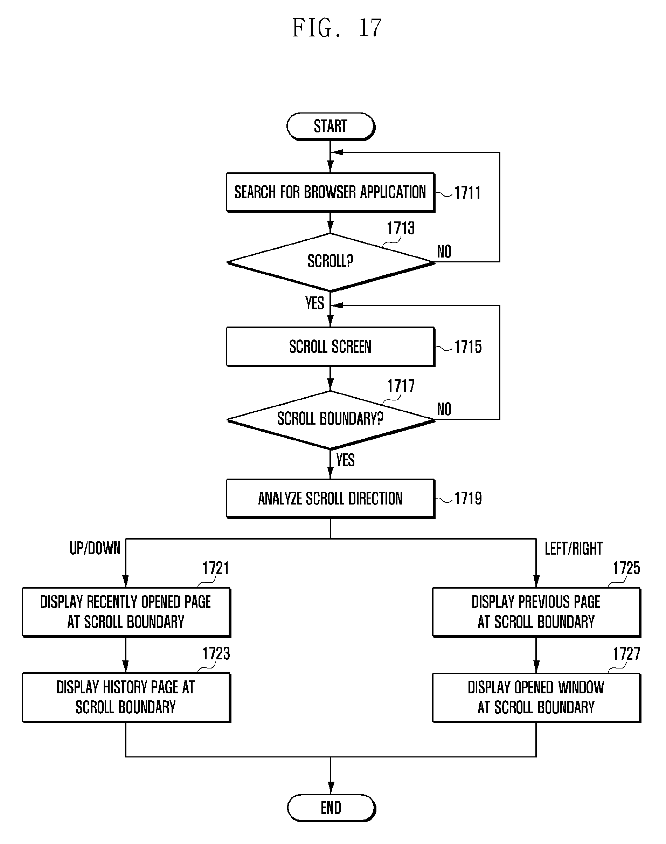

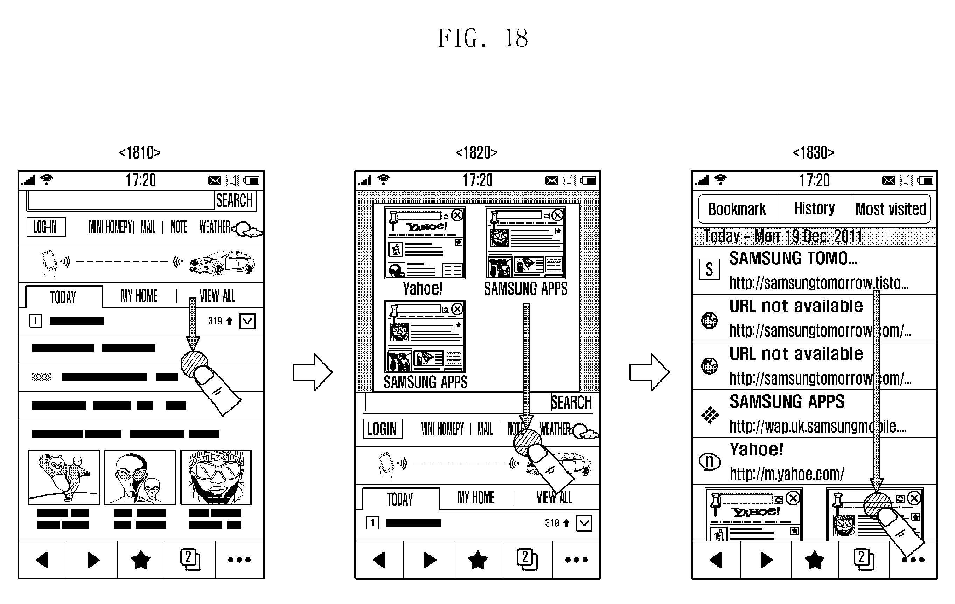

FIG. 17 is a flowchart illustrating a procedure for processing a browser application recommended action according to an exemplary embodiment of the present invention, and FIG. 18 is a diagram illustrating operations related to a scroll action for a browser application in a procedure, for example, operations of FIG. 17 according to an exemplary embodiment of the present invention.

Referring to FIGs. 17 and 18, the control unit 100 performs a browser search operation at step 1711. If the user takes a scroll action on the screen as denoted by reference number 1810, the control unit 100 detects the scroll action at step 1713 and controls the scrolling of the image displayed by the display unit 130 according to the scroll action at step 1715. If the scroll action reaches a scroll boundary, the control unit 100 detects this at step 1717 and analyzes the scroll direction at step 1719. If the scroll direction is an upward/downward direction, the control unit 100 controls to display the recent_pages recommended action on the screen as denoted by reference number 1820 and, if the scroll action is maintained in this state, the history page recommended action on the screen as denoted by reference number 1830, in their priority order at steps 1721 and 1723. Otherwise, if the scroll direction is a leftward/rightward direction, the control unit 100 controls to display the previous_page recommended action at step 1725 and, if the scroll action is maintained, the opened windows recommended action on the screen in their priority order at step 1727. Thereafter, the control unit 100 ends the procedure of processing a browser application recommended action.

A music player application is the application operating on the background for replaying music files. When registering it in association with a recommended action, the music player application can be registered with the recommended action table along with the information, such as an application publisher (i.e., Samsung), an application category (i.e., a music player), an application type (i.e., an app), and an information type (i.e., music). For example, the music player application recommended action can be registered with the recommended action table along with the parameters of same publisher_11 and similar_app_11. In addition, the music player application can be registered in association with music hub action having the weight of 1 and recent app action having the weight of 0.9.

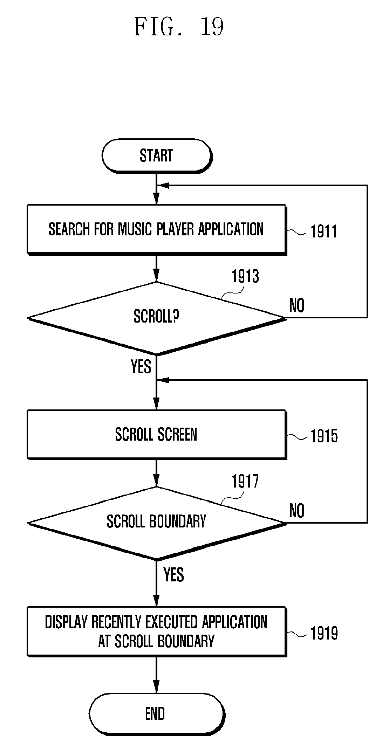

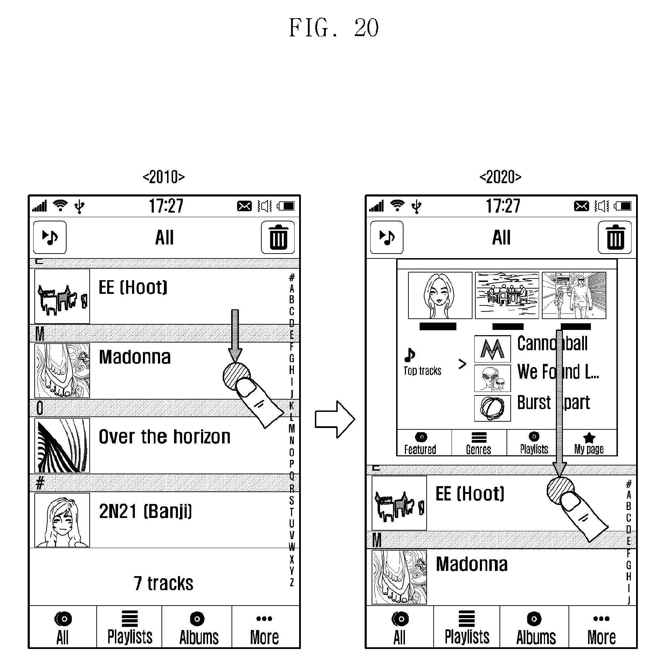

FIG. 19 is a flowchart illustrating a procedure for processing a music player application recommended action according to an exemplary embodiment of the present invention, and FIG. 20 is a diagram illustrating operations related to a scroll action for a music player application in a procedure, for example, operations of FIG. 19 according to an exemplary embodiment of the present invention.

Referring to FIGs. 19 and 20, the control unit 100 performs a music player application search operation at step 1911. If the user takes a scroll action on the screen as denoted by reference number 2010, the control unit 100 detects the scroll action at step 1913 and controls the scrolling of the image displayed by the display unit 130 according to the scroll action at step 1915. If the scroll action reaches a scroll boundary, the control unit 100 detects this at step 1917 and provides the recently executed application 100 as the recommended action subsequent to the end of the navigation on the screen as denoted by reference number 2020 at step 1919. Thereafter, the control unit 100 ends the procedure of processing a music player application recommended action.

A logs application is the application for providing the recently used contact information in order for the user to search for the contact quickly. When registering it in association with a recommended action, the logs application can be registered with the recommended action table along with the information, such as an application publisher (i.e., Samsung), an application category (i.e., a log provider), an application type (i.e., an app), and an information type (i.e., NULL). In addition, the logs application can be registered in association with favorite friend action having the weight of 1 and phonebook action having the weight of 0.9.

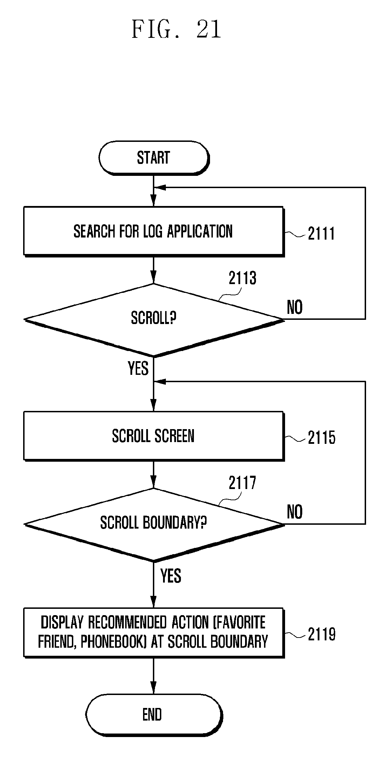

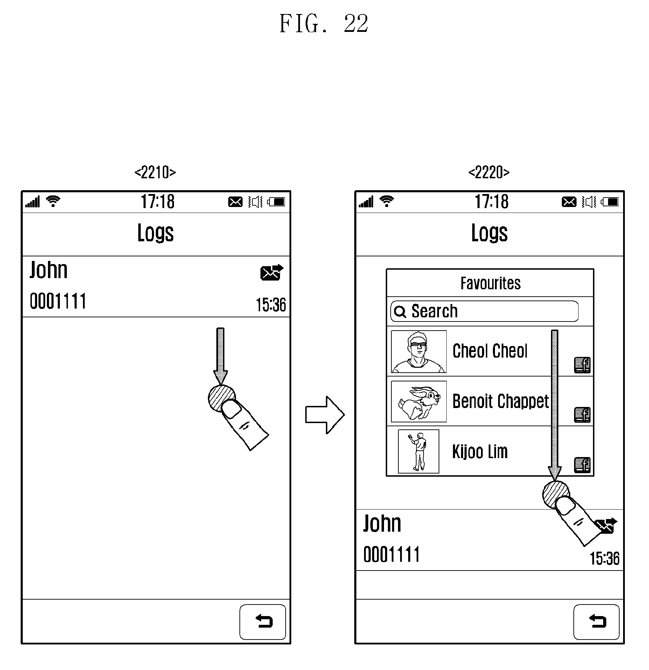

FIG. 21 is a flowchart illustrating a procedure for processing a logs application recommended action according to an exemplary embodiment of the present invention, and FIG. 22 is a diagram illustrating operations related to a scroll action for a logs application in a procedure, for example, operations of FIG. 21 according to an exemplary embodiment of the present invention.

Referring to FIGs. 21 and 22, the control unit 100 performs a logs application search operation at step 2111. If the user takes a scroll action on the screen as denoted by reference number 2210, the control unit detects the scroll action at step 2113 and controls the scrolling of the image displayed by the display unit 130 according to the scroll action at step 2115. If the scroll action reaches a scroll boundary, the control unit 100 detects this at step 2117 and provides the favorite friend application as the recommended action at the boundary of the navigation area on the screen at step 2119 as denoted by reference number 2220. If the scroll action is maintained in the state where the favorite friend application is displayed as the recommended action, the control unit 100 provides the phonebook application having the next highest priority as the recommended action. Thereafter, the control unit 100 ends the procedure of processing a logs application recommended action.

An image viewer application is the application for displaying images in response to a request from another application. For example, the image viewer application is capable of displaying the image received through an email application or a messenger application. When registering it in association with a recommended action, the image viewer application can be registered with the recommended action table along with the information, such as an application publisher (i.e., Samsung), an application category (i.e., an image viewer), an application type (i.e., an app), and an information type (i.e., NULL). For example, the image view application can be registered with the recommended action table along with the parameters of same publisher_7 and similar_app_7. At this time, the image viewer application can be registered in association with previous_app action having the weight of 1, image editor action having the weight of 0.9, and SNS update action having the weight of 0.8. If the scroll action reaches a scroll boundary of the navigation area such that a recommended action is requested, the control unit 100 executes the previous_app recommended action having the highest weight. If the recommended action having the highest priority is not of the intended application, the user may maintain the scroll action such that the image editor and SNS update actions provided as recommended actions in their priority order.

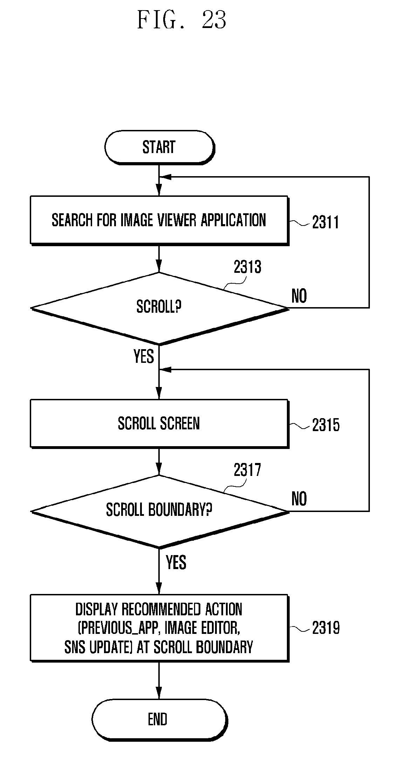

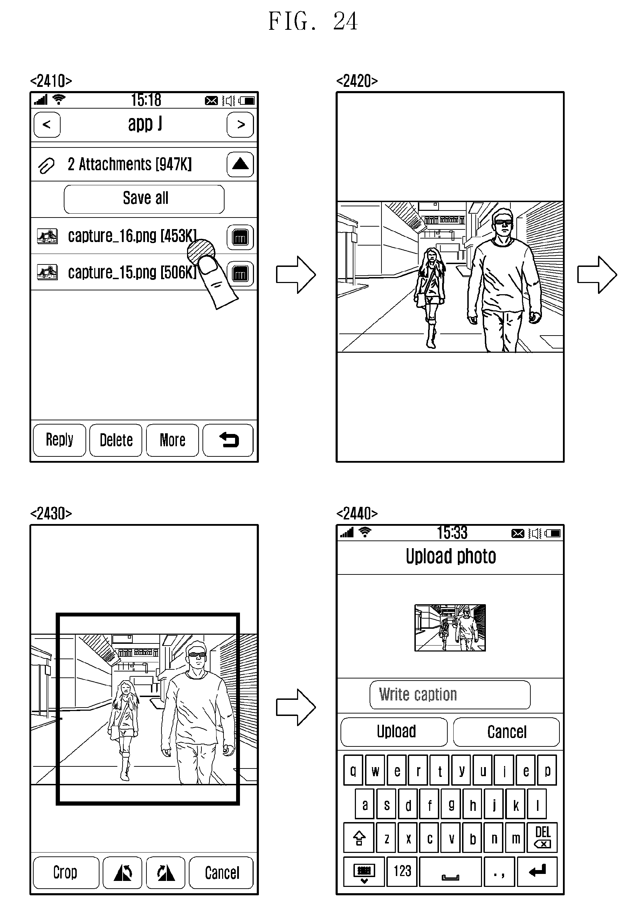

FIG. 23 is a flowchart illustrating a procedure for processing an image viewer application recommended action according to an exemplary embodiment of the present invention, and FIG. 24 is a diagram illustrating operations related to a scroll action for an image viewer application in a procedure, for example, operations of FIG. 23 according to an exemplary embodiment of the present invention. Here, FIG. 24 is directed to the case where the previous_app is of the email application.

Referring to FIGs. 23 and 24, the control unit 100 performs an image viewer search operation at step 2311. If a specific image is selected in the list of the images on the screen as denoted by reference number 2410, the selected image is displayed on the screen as denoted by reference number 2420. In this state, if the user takes a scroll action, the control unit 100 detects the scroll action at step 2313 and controls the scrolling of the image displayed by the display unit 130 on the screen according to the scroll action at step 2315 as denoted by reference number 2430. If the scroll action reaches a scroll boundary of the image, the control unit 100 detects this at step 2317 and displays the recommended action (i.e., an email) at step 2319. In this state, the user may upload the image through the email application as denoted by reference number 2440. If the scroll action is maintained in this state, the control unit 100 controls to display the image editor screen and the SNS update screen in sequence according to the priorities of the image editor and SNS update actions. Thereafter, the control unit 100 ends the procedure of processing an image viewer application recommended action.

As described above, in the state where the user takes a scroll action to navigate objects on the screen of the terminal, if the scroll action reaches a scroll boundary, the exemplary method presents the recommended actions registered in association with the corresponding application in sequence. For example, if the user taking the scroll action fails finding a target object or attempts changing the search range, the terminal provides, when the scroll action for searching for the target object reaches a scroll boundary, the recommended actions preset by the user or the manufacturer in sequence for the user to quickly move to other search areas. The above exemplary navigation method can be accomplished by configuring the recommended actions per application as described with reference to FIGs. 7 through 24.

As described above, the exemplary terminal is advantageous in that, when the scroll action for navigating objects arranged on the screen reaches a scroll boundary, a recommended action preconfigured in association with the corresponding application is provided. For example, when the user scrolling the screen in search of an object fails finding the object or attempts another search, the terminal provides the recommended actions present by the user or the manufacturer from the scroll boundary subsequently such that the user may seamlessly continue scrolling to search for the object in other search areas.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus comprising:
a touch panel for detecting a touch event;
a memory for storing recommended action tables including recommended actions per application;
a control unit for, when a scroll action detected on the touch panel reaches a scroll boundary, controlling to display the recommended actions registered with the recommended action table in association with a current application; and
a display unit for displaying the applications corresponding to the recommended actions at the scroll boundary of the current application under the control of the control unit.

2. The apparatus of claim 1, wherein the control unit controls, when the current application has a plurality of recommended actions registered with the recommended action table and the scroll action is maintained, the displaying of the recommended actions in a sequenced priority order.

3. The apparatus of claim 2, wherein the control unit generates the recommended action table per application by registering recommended action information input through touch panel.

4. The apparatus of claim 2, wherein the control unit comprises:
a navigator for collecting a touch event occurring on the touch panel and for displaying the touch event on the display unit;
a scroll executor for, when the touch event is a scroll touch event, scrolling a screen on the display unit and requesting the recommended actions at the scroll boundary to subsequently display the recommended actions in sequence at the scroll boundary; and
a recommended action determiner for providing the scroll executor with the recommended action registered with the application recommended action table.

5. The apparatus of claim 4, wherein the control unit comprises a recommended action register for registering the recommended action input through the touch panel to generate the application recommended action table.

6. A scroll control method of a terminal, the method comprising:
scrolling a screen in response to a scroll action detected on a touch panel;
monitoring to detect a scroll boundary of a navigation area which is scrolled in response to the scroll action; and
displaying, when the scroll boundary is detected, applications corresponding to recommended actions registered with a recommended action table of a current application in sequence.

7. The scroll control method of claim 6, wherein the application recommended action table comprises at least one recommended action having a priority and wherein the displaying of the applications comprises presenting, when the current application has a plurality of recommended actions registered with the recommended action table and the scroll action is maintained, the recommended actions in a sequenced priority order.

8. The scroll control method of claim 7, wherein the presenting of the recommended actions comprises executing, when one of the recommended actions is selected, the application corresponding to the selected action.

9. The scroll control method of claim 8, further comprising:
generating the application recommended action table by registering recommended action information input.

10. The scroll control method of claim 6, wherein the application is a gallery application, the recommended action table of the gallery application is a depth type, and the displaying of the applications comprises presenting menu screens of previous depths in sequence at the scroll boundary.

11. The scroll control method of claim 6, wherein the application is an email application, the recommended action table of the email application is a list type, and the displaying of the applications comprises:
analyzing a scroll direction at the scroll boundary of the email navigation area; and
presenting next or previous emails of an email list in sequence according to the scroll direction.

12. The scroll control method of claim 6, wherein the application is a setting application, the recommended action table of the setting application is of depth type and list type, and the displaying of the applications comprises:
presenting a menu of previous depth at the scroll boundary; and
presenting, when the scroll action is maintained at the scroll boundary of the previous depth menu, next setting menus of a menu list in sequence.

13. The scroll control method of claim 6, wherein the application is an image viewer application, the recommended action table of the gallery application is of previous_app and image editor, and the displaying of the applications comprises:
presenting a menu of a previous application at the scroll boundary of the image viewer navigation area; and
presenting, when the scroll action is maintained at the scroll boundary, an image editor screen as the recommended action.

14. The scroll control method of claim 6, wherein the application is a messenger application, the recommended action table of the messenger application is of a similar_app and a Social Networking Service (SNS) application, and the displaying of the applications comprises:
presenting a channel application as a similar application at the scroll boundary of the image viewer navigation area; and
presenting, when the scroll action is maintained at the scroll boundary of the similar application, the SNS application having next priority as another recommended action.

15. The scroll control method of claim 6, wherein the application is a calendar application, the recommended action table of the calendar application is of a messenger application, and the displaying of the applications comprises presenting the messenger application at the scroll boundary of the calendar application navigation area.
